# EUROPEAN PATENT APPLICATION

(11) **EP 2 138 293 A1**
(43) Date of publication of application: **30.12.2009**
(21) Application number: 08159101.8
(22) Date of filing: 26.06.2008
(51) Int. Cl.: B29B 17/00, C08J 11/06

(54) **Recovery of cellular plastic material**

(71) Applicant: Olsson, Bozena Nenna, 246 21 Löddeköpinge (SE)
(72) Inventor: Olsson, Bozena Nenna, 246 21 Löddeköpinge (SE)
(74) Representative: Neij, Hans Mikael

(57) **Abstract**

The invention relates to e new environmentally friendly process in which cellular containing PVC, such as rigid PVC foam can be recovered and reused in new products together with other components.

## Description

### FIELD OF INVENTION

The invention relates to e new environmentally friendly process in which cellular containing PVC, such as rigid PVC foam can be recovered and reused in new products together with other components.

### BACKGROUND OF THE INVENTION

Rigid polyvinyl chloride (PVC) foam material (among others cross-linked PVC rigid foam) is a very hard cellular plastic material, being difficult to extrude to be recovered into a new cellular plastic material. When different product are produced from rigid PVC foam material large amounts are discarded, wherein the discarded material have a density from 40 kg/m³. To reduce the volume of the discarded material, the discarded material is grinded and the material will then be packet as small well packed products. By such a process it is possible to reduce the density to about 400 to 1000 kg/m³. Additionally, combustion of such materials is not environmentally friendly and influences the climate changes and thereby not an alternative way nowadays.

Rigid PVC foam material contains approximately 25 % chlorine and the major part of the material can thereby solely be burned in special combustion ovens. The combustion is very expensive and by that method the material will be destructed and not recovered.

The commonly used way to get rid of rigid PVC foam material is to deposit the material. However, the increase in saving our environment also result in an increasing demand to reduce the release of dangerous chlorinated substances and therefore there is a need of replacing old fashioned methods like combustion or deposition due to that they release chlorinated substances into the environment. A global problem is the increasing mountain of waste and the lack of recovery methods that in an ecological way recovers products without using the above mentioned methods. Combustion releases chorine gas which will be captured by a filter in the combustion oven, which is classified as being dangerous deposition material and cannot be destructed. In Sweden for example there are solely three approved plants wherein materials containing chlorine can be combusted. The process is very expensive and non-economic.

To save the ozone condition it might be that in the near future it will be forbidden to burn PVC globally, which will give rise to new deposited problem which will destroy the environment. Therefore there is a need of developing new environmentally friendly methods in which chlorinated PVC may be recovered and thereby reused. Accordingly there is also a need of developing new improved methods which efficiently can be used to recover cellular plastics, to reduce the large deposit of these plastics which have a low density.

### SUMMARY OF THE INVENTION

The invention relates to a new environmentally friendly process in which chlorine containing PVC as well as cellular plastics can be recovered and reused. The process have a number of profits such as no chlorine will be released into the air, and the large amounts of deposited chlorine containing PVC will be reduced and or eliminated, an increase in the possibility to recover old products containing the PVC. Additionally, new products may be produced from the recovered material and the PVC will be recycled again and again.

In a first aspect the invention relates to a method producing chlorine containing PVC recovered products comprising the steps of; providing used cellular containing PVC with chlorine, grinding and/or pulverising said PVC, adding at least one binding agent having a melting temperature below 180 °C, homogenising said PVC and said binding agent, moulding said PVC and binding agent and obtaining a chlorine containing PVC recovered product.

In a second aspect the invention relates to a chlorine containing PVC recovered product obtainable according to any of preceding claims.

### DETAILED DESCRIPTION OF THE INVENTION

The invention relates to the recovery of chlorine containing PVC foam material as well as cellular PVC material wherein said material is recovered and reused. Examples of material include Cross-linked PVC rigid foam, which may be obtained from different sources such as material that have not been used during the manufacturing of other products and which needs to be discarded, such as during the production of wing for wind power, small and large boats and ferries etc or other PVC rests that contains chlorine and may be extruded with soft PVC materials such as old floor plates, PVC cables as well as other materials containing PVC such as floor carpets, borders, tiles etc, wherein said recovered PVC material may be grinded to a size varying from 0.1- 5 mm and then be used as a recovered granulate. The cross-linked PVC rigid foam has a low specific weight about 40 kg/m³ which prior to use will be grinded to a size of 0.001 - 1 mm. Another example being Cellular foamed polymer products based on polyvinyl chloride. Examples of PVC foam material includes all types of rigid PVC foam, cross-linked rigid PVC, cellular foamed polymer based on polyvinylchloride as well as cellular products based on polyvinylchloride. Soft PVC comprises polyvinylchloride, polyuretan, etc and Cross-linked PVC rigid foam being based on polyvinylchloride,polyamid and polyurea.

When the PVC material is homogenised a binding agent is added to the PVC material and the binding agent and PVC material is either moulded together either cold or warm moulding or extruded together. Together, all the ingredients are mixed together by an extrude machine to a homogenous mixture prior to that the mixture is moulded, wherein the homogenous mixture will be moulded into a hard and stabile product. The moulding may be performed with or without heat. If the materials are to be heat moulded together the temperature will be selected such as being below 180 °C so that the binding agent will melt and bind to the cellular PVC foam and thereby a hard rigid product is produced. Prior to that the moulding step will be performed the components are homogenised. If the materials are extruded the different components are mixed prior to that the components are extruded together. However, independent on which method is used the chloride containing PVC foam material as well as cellular PVC material is mixed with a binding agents which melt at a temperature below 180 °C, such as 120-180 °C.

Examples of binding agents include soft PVC materials, such as PVC that can be formed into products. Said soft PVC has a melting point below 180 °C.? Other binding agents may be (PE) polyeten, LDPE & LLDPE, (polyethylene) HDPE (high density polyethylene) PS, EPS (polystyrene), PET (polyethylene), i.e., PVC materials that does not contain chlorine. These materials has a lower melting point than cross-linked PVC rigid foam and may therefore be extruded together with the cross-linked PVC rigid foam into new products without any release of chlorine which makes them suitable to be used together with a PVC material containing chlorine for the production of a new PVC material wherein said recovered new material comprises PVC and which has been produce by a method in which not chlorine is released. Another group of binding agents are cellulosic materials, lime, fibres from tree, fibres glass or other synthetic fibres.

Accordingly other binding components may be used such as old PVC materials containing glue may be mixed with rigid PVC foam and extruded into a homogenous recycle plastic particle.

Soft PVC may be used for the recovering of cellular containing PVC containing chlorine in a size of up to about 5 mm. However, if divinylcell is used it may be used in a size of from 0.001 to 1mm.
Examples of suitable machines to be used in the invention being extruder, calander or belt press or any other suitable machines.

### EXAMPLE

### Example 1. Plates produced by recovered PVC with heat moulding. Divenylcell is the trade mark for a rigid cross-linker PVC rigid foam.

**Table 1**

| No of plate | Contents of PVC waste | Moulding time [min/sek] | Temp. [°C] | Cooling [min] |
|---|---|---|---|---|
| 1 | PVC Polyvinyl chloride waste + remains of metallic about 100 % | 10-20 min | 160-180 | 10 |
| 2 | Polyvinyl chloride/soft PVC waste about 50 % Divinycell waste about 50 % | 5-10 min | 130-180 | 10 |
| 3 | Granulate of soft PVC/ Polyvinyl chloride about 100% | 25min | 140-180 | 5 |
| 4 | Granulate of soft PVC/ Polyvinyl chloride about 60% Divinycell about 40% | 10-25 min | 140-180 | 5 |
| 5 | Granulate of soft PVC/ Polyvinyl chloride included calcium carbonate about 70% Divinycell about 30 % | 5-25 sek | 130-180 | 2-5 |
| 6 | Granulate of soft PVC/ Polyvinyl chloride included calcium carbonate about 80% Divinycell about 20 % | 5-25 sek | 130-180 | 2-5 |
| 7 | Soft PVC/ Polyvinyl chloride about 70% Divinycell about 30 % | 10-25 sek | 130-180 | 2-5 |
| 8 | Granulate and soft PVC/ Polyvinyl chloride included fibre wood; about 80% Divinycell about 20 % | 5-25 sek | 130-180 | 2-5 |

Different moulding times influences the thickness of the different plates from 3-15 mm.

### Example 2. Plates produced by recovered PVC by moulding without heat.

**Table 2**

| No of plate | Contents of PVC waste | Moulding time [ sek] | Temp. [°C] |
|---|---|---|---|
| 1 | PVC Polyvinyl chloride waste + remains of metallic about 100 % | 10-20 | without heating |
| 2 | Polyvinyl chloride/soft PVC waste about 50 % Divinycell waste about 50 % | 5-10 | " |
| 3 | Granulate of soft PVC/ Polyvinyl chloride about 100% | 25 | " |
| 4 | Granulate of soft PVC/ Polyvinyl chloride included calcium carbonate/ fibre wood about 60% Divinycell about 40% | 10-25 | " |
| 5 | Granulate of soft PVC/ Polyvinyl chloride included calcium carbonate about 50% Divinycell about50 % | 5-25 | " |
| 6 | Granulate of soft PVC/ Polyvinyl chloride included calcium carbonate/ fibre wood about 80% Divinycell about 20 % | 5-25 s | " |
| 7 | Soft PVC/ Polyvinyl chloride about 70% Divinycell about 30 % | 10-25 | " |
| 8 | Granulate and soft PVC/ Polyvinyl chloride included fibre wood/ calcium carbonate about 80% Divinycell about 20 % | 5-25 | " |

Different moulding times influences the thickness of the different plates from 3-15 mm.

### Example 3. Plates produced by recovered PVC by moulding with or without heat.

**Table 3**

| No of plate | Contents of PVC waste and other plastic without PVC | Moulding time [ sek] | Temp. [°C] | Cooling [min] |
|---|---|---|---|---|
| 1 | PVC Polyvinyl chloride /divinycell about 70% LDPE about 30% | 10-20 | 180-200 without | 10 - |
| 1A | PVC Polyvinyl chloride /divinycell about 70% LDPE about 30% | | heating | |
| 2 | Divinycell waste about 50 % LDPE about 50% | 5-10 min | 130-180 | 10 |
| 2A | Divinycell about 50 % LDPE /PET about 50% | | without heating | - |
| 3 | Granulate of soft PVC/ Polyvinyl chloride about 100% PS/EPS about 40% | 25min | 140-180 | 5 - |
| 3A | Granulate of soft PVC/ Polyvinyl chloride about 60% PS/EPS about 40% | | without heating | |
| 4 | Granulate of soft PVC/ Polyvinyl chloride/ Divinycell about 60% EPS about 20% HDPE about 20% | 10-25 min | 140-180 | 5 |
| 4A | Granulate of soft PVC/ Polyvinyl chloride/ Divinycell about 60% EPS about 20% HDPE about 20% | | without heating | - |
| 5 | Soft PVC/ Polyvinyl chloride included calcium carbonate about 60% Divinycell about 30 % PET about 10% | 5-25 sek | 130-180 | 2-5 |
| 5A | Soft PVC/ Polyvinyl chloride included calcium carbonate about 60% Divinycell about 30 % PET about 10% | | without heating | - |
| 6 | Granulate of soft PVC/ Polyvinyl chloride about 60% Divinycell about 20 % PP about 20% | 5-25 sek | 130-180 | 2-5 |
| 6A | Granulate of soft PVC/ Polyvinyl chloride about 60% Divinycell about 20 % PP about 20% | | without heating | - |
| 7 7A | Soft PVC/ Polyvinyl chloride about 60% Divinycell about 30 % HDPE about 10% | 10-25 sek | 130-180 without | 2-5 |
| 7A | Soft PVC/ Polyvinyl chloride about 60% Divinycell about 30 % HDPE about 10% | | heating | - |
| 8 | Soft PVC/ Polyvinyl chloride included fibre wood about 70% Divinycell about 20 % LDPE/HDPE about 10% | 5-25 sek | 130-180 | 2-5 |
| 8A | Soft PVC/ Polyvinyl chloride included fibre wood about 70% Divinycell about 20 % LDPE/HDPE about 10% | | without heating | - |

## Claims

1. A method producing chlorine containing PVC recovered products comprising the steps of;
a) providing used PVC with chlorine,
b) grinding and/or pulverising said PVC
c) adding at least one binding agent having a melting temperature below 180°C,
d) homogenising said PVC and said binding agent,
e) moulding said PVC and binding agent and
f) obtaining a chlorine containing PVC recovered product.

2. The method according to claim 1, wherein said binding agent is selected from the group consisting of soft PVC materials, PE (polyeten), LDPE & LLDPE, (polyethylene), HDPE (high density polyethylene) PS, EPS (polystyrene) and PET (polyethylene) being substantially free from chlorine.

3. The method according to any of claims 1-2, wherein said moulding is either heat or cold moulding and wherein said heat moulding is below 180°C.

4. The method according to any of preceding claims, wherein said PVC containing chlorine is cross-linker PVC rigid foam or cellular foamed polymer based on polyvinylchloride.

5. The method according to any of preceding claims, wherein said binding agent is selected from the group consisting of cellulosic materials, lime, fibres from tree, fibres glass and other synthetic fibres.

6. The method according to any of preceding claims, wherein said heat moulding is between 160-180 °C.

7. The method according to any of preceding claims, wherein said PVC is cross-linker PVC rigid foam and said binding agent is polyvinylchloride.

8. A chlorine containing PVC recovered product obtainable according to any of preceding claims.
